# EUROPEAN PATENT SPECIFICATION

(11) **EP 2 554 039 B1**
(45) Date of publication and mention of the grant of the patent: **16.01.2019**
(21) Application number: 12005665.0
(22) Date of filing: 03.08.2012
(51) Int. Cl.: A01D 34/82, A01D 34/416

(54) **Brush cutter**
Buschräumer
Débroussailleuse

(30) Priority: 04.08.2011 JP 2011171203
(43) Date of publication of application: 06.02.2013
(73) Proprietor: Makita Corporation, Anjo-shi, Aichi 446-8502 (JP)
(72) Inventor: Kamiya, Takahiro, Anjo-shi, Aichi 446-8502 (JP); Morita, Yoshifumi, Anjo-shi, Aichi 446-8502 (JP); Ohno, Shoko, Anjo-shi, Aichi 446-8502 (JP)
(74) Representative: Müller-Boré & Partner Patentanwälte PartG mbB

(56) References cited:
- EP-A1- 0 215 416
- GB-A- 904 081
- US-A- 4 161 820
- US-A- 4 200 978
- US-A- 4 419 822
- US-A- 4 561 180
- US-A- 4 959 904
- US-A1- 2011 214 294

## Description

The present application relates to a brush cutter for cutting off plants, and particularly to a cord type brush cutter that uses a string-like cutting cord as a cutting blade.

US 4,200,978 B discloses a cord type brush cutter. This brush cutter is provided with an operating rod, a cord holder that is rotatably driven at a front end of the operating rod, a cutting cord held by the cord holder, and an under cover that covers from below a part of a region in which the cutting cord revolves.

A root part of the cutting cord can hardly cut plants due to the slow revolving speed of the cutting cord. It is, therefore, preferred that a region in which the root part of the cutting cord revolves be hidden by the under cover, so that the root part of the cutting cord can be prohibited from unnecessarily coming into contact with plants. As a result, the load imposed on the cutting cord can be reduced, increasing the revolving speed of the cutting cord and improving the cutting ability of a tip part of the cutting cord. In addition, energy loss can be reduced, saving fuel or electric power consumption and increasing the running time of the brush cutter.

Hiding the root part of the cutting cord with the under cover makes it difficult to replace the cutting cord. Because the cutting cord is susceptible to damage, the cutting cord may have to be replaced many times during the use of the brush cutter. If it is difficult to replace the cutting cord, then it is extremely troublesome for a user to handle the brush cutter.
US 4 959 904 A discloses a flail cutter head wherein additional flail can be fed from the device by bumping its rotating body on the ground. A pair of disc-shaped cams are readily mounted on the centerline of the body on the opposite radial sides of a spool around which the flails are wound. The disc-shaped cams interact with facing cam followers on the inner surfaces of spool covers forming the major portions of the body so that when the lower cam is moved axially out of contact with the lower follower, by bouncing a downwardly biased, axially mounted bumper member on the ground, the other has already moved axially upwardly in position for engagement with the upper follower. This engagement occurs after a predetermined rotation of the spool. Once the bounce is over, the upper cam moves axially in the reverse direction, disengaging the upper cam follower after the lower cam is in position the contact the lower cam followers after another predetermined of rotation. The resulting two stage relative rotation of the spool allows predetermined lengths of flail to be fed out through the body of the head.
US 4 419 822 A discloses a bump-feed monofilament string trimmer having a sleeve-like escapement member axially slidable on a drive member and nested in a spool member which holds a coil of cutting filament. Axially downwardly extending fingers of the escapement member engage in window-like slots in a downwardly extending dome-like protrusion of the spool member to prevent relative rotation between the two members. The fingers have external screw threaded portions which extend through the slots and are engaged by a nut which releasably secures the spool member to the escapement member. The driving member has teeth which normally drivingly engage with an upper series of internal clutch teeth of the escapement member, and temporarily engage with a lower series of clutch teeth when the dome-like protrusion is "bumped" on the ground, whereby discrete lengths of cutting filament are let out from the spool member.

It is therefore an object of the present teachings to disclose a technique for improving the usability of a brush cutter having an under cover.

To this end, the present teachings disclose a brush cutter in which the under cover is provided with an opening that is configured to expose a cord feeding button. According to this configuration, a user can press the cord feeding button e.g. against the ground to feed the cutting cord from the cord holder, even when the under cover is attached to the brush cutter. For example, even when the cutting cord unexpectedly snaps while the brush cutter is running, the user may press the cord feeding button against the ground surface. It is not necessary to stop the brush cutter to replace the cutting cord. Consequently, a new cutting cord is fed from the cord holder, allowing the user to continue using the brush cutter.

The present invention is defined by the independent claim. Preferred embodiments are defined in the dependent claims. In one aspect of the present teachings, a brush cutter comprises an operating rod, a cord holder configured to be rotatably driven at a front end of the operating rod, a string-like cutting cord held by the cord holder and configured that a tip of the cutting cord is drawn out from the cord holder, and an under cover configured to cover from an under side a part of a region in which the cutting cord extending from the cord holder revolves. The cord holder is provided with a cord feeding button. The cord feeding button projects downward and is configured to feed the cutting cord by being pressed. The under cover is provided with an opening that exposes the cord feeding button.
FIG. 1 shows an entire brush cutter of an embodiment.
FIG. 2 shows a front end part of an operating rod viewed from obliquely above.
FIG. 3 shows the front end part of the operating rod viewed from obliquely below.
FIG. 4 is a cross-sectional diagram taken along line IV-IV of FIG. 1.
FIG. 5 shows the inside of a motor housing.
FIG. 6 shows a modification of an under cover with a cutoff.
FIG. 7 shows a modification of a cross-sectional shape of the under cover.
FIG. 8 shows a modification of the cross-sectional shape of the under cover.
FIG. 9 shows the entire spool.
FIG. 10 is a cross-sectional diagram showing a structure of a base end locking part of the spool.

According to the present invention, the brush cutter has an upper cover configured to cover from an upper side and lateral side a part of a region in which a cutting cord extending from a cord holder revolves. The under cover is fixed to the upper cover. This configuration can realize a relatively simple installation structure of the under cover.

Note, that the installation structure of the under cover is not limited to the configuration described above. For instance, the under cover may be configured to be attached to the cord holder. In this case, a bearing may be preferably interposed between the under cover and the cord holder. The bearing interposed between the under cover and the cord holder can prevent frictional force of plants in contact with the under cover from inhibiting rotary drive of the cord holder.

In one embodiment of the present teachings, it is preferred that an outer edge of the under cover be curved or folded upward. This configuration can prevent the outer edge of the under cover from being stuck on plants and the ground surface. The user, therefore, can smoothly operate the brush cutter along the ground surface.

In an embodiment of the present teachings, it is preferred that a protrusion protruding upward (toward the cutting cord) be provided on an edge of an opening of the under cover. This configuration can prevent the cutting cord from entering the opening of the under cover.

In an embodiment of the present teachings, it is preferred that a cutoff be provided on the under cover so as to extend from the outer edge of the under cover to the opening. This configuration can allow the user to easily attach the cutting cord to the cord holder without having the under cover in the way.

In the embodiment described above, it is preferred that the cutoff mat be at least partly located below the operating rod. Normally, plants under the operating rod are already cut off. Therefore, it is less likely that providing the cutoff on the under cover in this region causes plants to come into contact with the root part of the cutting cord.

In one embodiment of the present teachings, it is preferred that the brush cutter also have a trimming cutter configured to cut the tip of the cutting cord drawn out from the cord holder. In this case, it is preferred that the trimming cutter be integrally formed with the under cover. This configuration can not only reduce the number of parts of the brush cutter and the time required to assemble the brush cutter, but also lower the production costs.

Representative, non-limiting examples of the present invention will now be described in further detail with reference to the attached drawings. This detailed description is merely intended to teach a person of skill in the art further details for practicing preferred aspects of the present teachings and is not intended to limit the scope of the invention. Furthermore, each of the additional features and teachings disclosed below may be utilized separately or in conjunction with other features and teachings to provide improved brush cutter, according to the appended claims.

Moreover, combinations of features and steps disclosed in the following detail description may not be necessary to practice the invention in the broadest sense, and are instead taught merely to particularly describe representative examples.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

Note that Directions such as "upper/upward," "lower/downward," "lateral," etc. described in the present specification are based on a posture of the brush cutter in case of being used by the user in a normal way. In detail, these directions indicate "upper/upward," "lower/downward," "lateral," orientations that are realized when the user grabs an operating rod or a handle fixed thereto and directs a cord holder and cutting cord toward a ground surface such that rotation axes thereof become vertical.

### EMBODIMENT

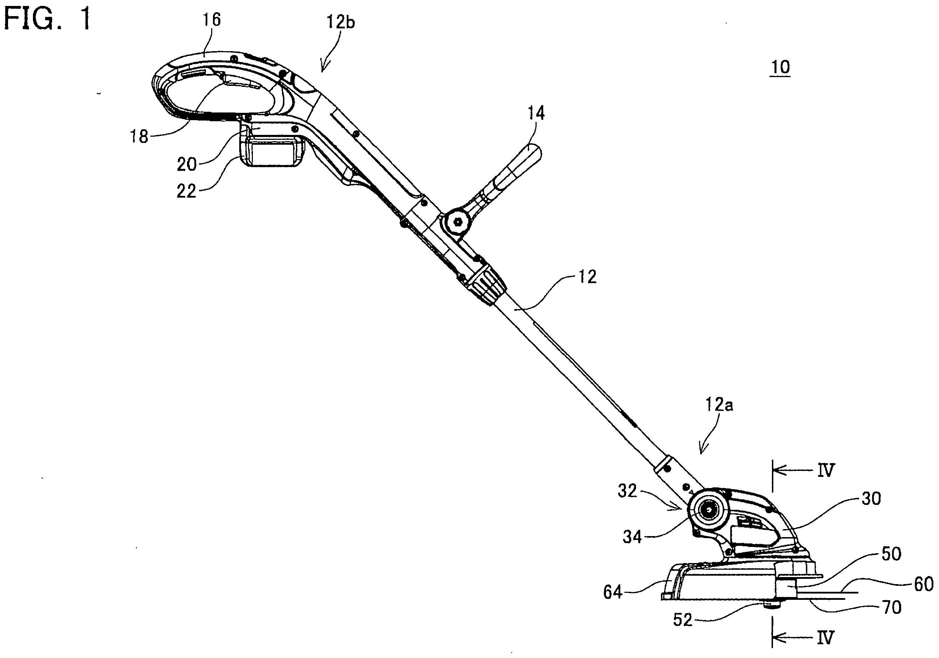

A brush cutter 10 of an embodiment is now described with reference to the drawings. The brush cutter 10 is a gardening power tool used for cutting off plants. As shown in FIG. 1, the brush cutter 10 has an operating rod 12. A rear end 12b of the operating rod 12 is provided with a handle 14 and a grip 16. Normally, a user grabs the handle 14 and the grip 16 to use the brush cutter 10. The grip 16 is provided with a trigger switch 18, which is a starting switch. A battery attachment 20 to/from which a battery pack 22 is attached/detached is provided under the grip 16. The brush cutter 10 of the present embodiment is of a cordless type having the rechargeable battery pack 22 as a power source.

As shown in FIGS. 1, 2 and 3, a front end 12a of the operating rod 12 is provided with a motor housing 30. The motor housing 30 is made of resin. The motor housing 30 is connected to the operating rod 12 by a joint mechanism 32 and capable of swinging with respect to the operating rod 12. The user can adjust the angle of the motor housing 30 in accordance with the height of the user or an inclination of a ground surface. The joint mechanism 32 is provided with a lock-off button 34. Pushing the lock-off button 34 enables the joint mechanism 32 to swing, and releasing the lock-off button 34 can fixate the joint mechanism 32.

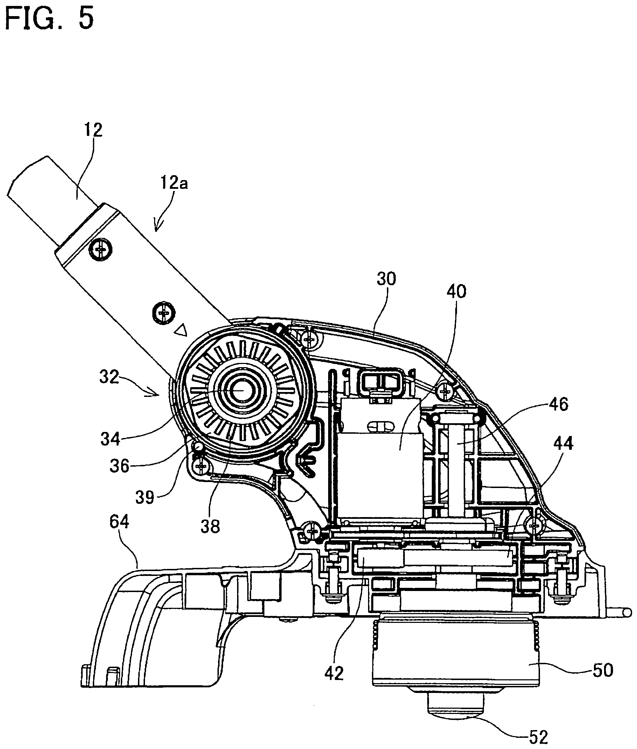

A cord holder 50 is provided under the motor housing 30. The cord holder 50 is supported so as to be able to rotate, and rotatably driven by a motor 40 provided inside the motor housing 30 (see FIG. 5). The cord holder 50 holds a string-like cutting cord 60. A tip of the cutting cord 60 is drawn out from the cord holder 50 and rotates along with the cord holder 50. The brush cutter 10 of the present embodiment uses the string-like cutting cord 60 as a cutting blade and causes the cutting cord 60 to revolve at high speeds to cut of plants. The cutting cord 60 of the present embodiment is, for example, a nylon cord.

The cord holder 50 is provided with a cord feeding button 52. The cord feeding button 52 protrudes downward. The cutting cord 60 can be fed from the cord holder 50 by pressing the cord feeding button 52. The cutting cord 60 is susceptible to damage and often snaps easily. However, the user may press the cord feeding button 52 against a ground surface without discontinuing the use of the brush cutter to replace the cutting cord 60. The cutting cord 60 is newly fed from the cord holder 50, allowing the user to continue using the brush cutter.

The front end 12a of the operating rod 12 is provided with an upper cover 64. The upper cover 64 is made mainly of resin. The upper cover 64 of the present embodiment is attached to the motor housing 30. However, the upper cover 64 may be configured to be attached directly to the operating rod 12. The upper cover 64 at least partly covers from an upper side and lateral side a region in which the cutting cord 60 revolves. Generally, the upper cover 64 has a funnel-like shape as viewed in a planar view. The upper cover 64 has a first radially-extending edge 64a and a second radially-extending edge 64b, and extend from the first radially-extending edge to the second radially-extending edge in a direction of rotation of the cord holder 50 (i.e., a direction of rotation of the cutting cord 60). Thus, the upper cover 64 is configured to cover a part of the region (a part on the user side) in which the cutting cord 60 revolves. The upper cover 64 is located between the cutting cord 60 and the user to prevent objects such as plants or rocks from scattering against the user.

The front end 12a of the operating rod 12 is provided with an under cover 70. The under cover 70 has a disk-like cover main body 72 and two supports 74a, 74b provided on an outer edge 72a of the cover main body 70. The under cover 70, made of metal, is created by bending a metal plate. The two supports 74a, 74b of the under cover 70 are fixed to the upper cover 64. The cover main body 72 of the under cover 70 is located under the cutting cord 60 extending from the cord holder 50 and covers from an under side the region in which the cutting cord 60 revolves. The diameter of the cover main body 72 is smaller than the diameter of the region in which the cutting cord 60 extending from the cord holder 50 revolves. For this reason, the cover main body 72 covers only a root part of the cutting cord 60, i.e. a part on the most proximal side among the fed-out portion of the cutting cord 60, and the tip part of the cutting cord 60 is exposed when viewed from below. Note in the present embodiment that the under cover 70 is fixed to the upper cover 64; however, the under cover 70 may be attached to the cord holder 50 via, for example, a bearing.

The root part of the cutting cord 60 can hardly cut plants due to the slow revolving speed of the cutting cord 60. It is, therefore, preferred that a region in which the root part of the cutting cord 60 revolves be hidden by the under cover 70, so that the root part of the cutting cord 60 can be prevented from unnecessarily coming into contact with plants. As a result, the load imposed on the cutting cord 60 can be reduced, increasing the revolving speed of the cutting cord 60 and improving the cutting ability of the tip part of the cutting cord 60. In addition, energy loss can be reduced, cutting electric power consumption of the brush cutter 10 and increasing the time of running the brush cutter by the battery pack 22.

An opening 76 is formed in the cover main body 72. The opening 76 is formed in the center of the cover main body 72 and exposes the cord holder 50 and the cord feeding button 52 downward. The cord feeding button 52 passes through the opening 76 and protrudes below the cover main body 72. Therefore, the cord feeding button 52 can be pressed against the ground surface, even with the under cover 70 attached to the brush cutter 10. Therefore, the cutting cord 60 can be fed from the cord holder 50.

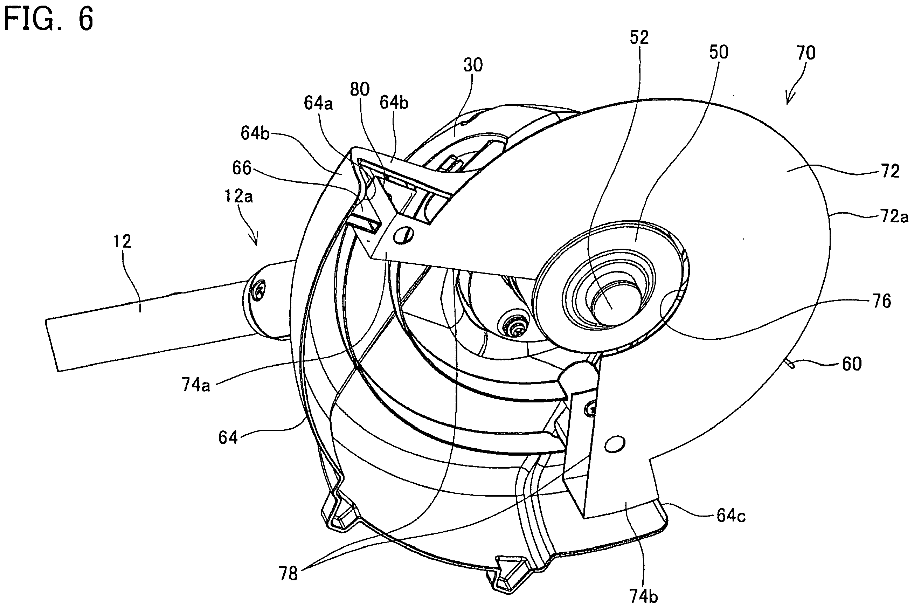

Here, as shown in FIG. 6, the cover main body 72 of the under cover 70 has a cutoff 78 in part of a circumferential direction of the cover main body 72 and may be in the shape of substantially a fan as viewed in a planar view. In this case, it is preferred that the cutoff 78 extend from the outer edge 72a of the cover main body 72 to the opening 76 formed in the center of the cover main body 72. This configuration can allow the user to easily attach the cutting cord 60 to the cord holder 50 without having the under cover 70 in the way. It is preferred that the cutoff 78 be located below the operating rod 12. Normally, plants located in a region under the operating rod 12 (i.e., a region on the user side with respect to the cord holder 50) are already cut off. Therefore, it is less likely that providing the cutoff 78 on the cover main body 72 in this region causes plants to come into contact with the root part of the cutting cord 60.

On the other hand, a movable cover may be provided to the cutoff 78 of the cover main body 72. According to this configuration, normally keeping the cover closed can prohibit plants from coming into contact with the root part of the cutting cord 60. Moreover, the user can open the cover so that the user can easily attach the cutting cord 60 to the cord holder 50 without having the under cover 70 in the way.

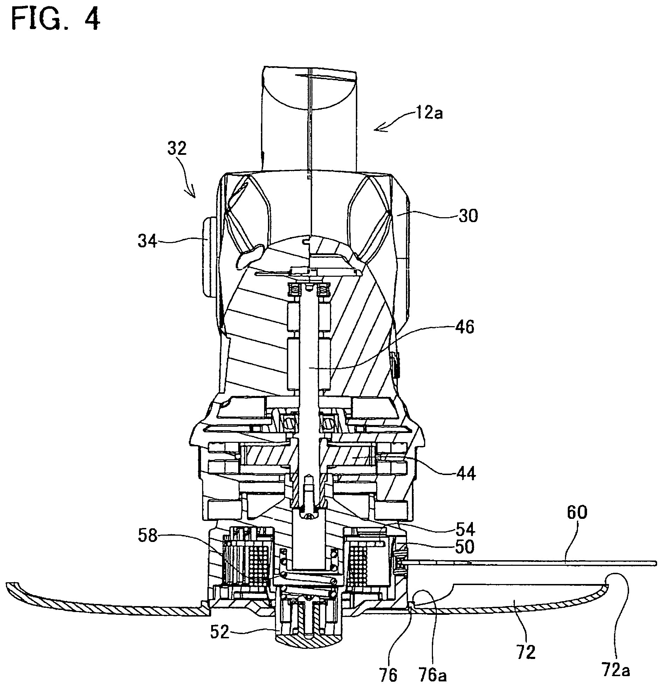

Next is described a cross-sectional shape of the under cover 70. As shown in FIG. 4, the cover main body 72 of the under cover 70 is not completely flat but is curved three-dimensionally. Especially the outer edge 72a of the cover main body 72 is curved upward. Because the outer edge 72a of the cover main body 72 is curved or folded upward in this manner, the outer edge 72a can be prevented from being stuck on plants and the ground surface. The user, therefore, can smoothly operate the brush cutter 10 along the ground surface. Note that the cover main body 72 of the present embodiment is curved gently upward from the opening 76 toward the outer edge 72a. Because the cover main body 72 is entirely curved into a downward convex, the user can operate the brush cutter 10 more smoothly along the ground.

Furthermore, an edge of the opening 76 of the cover main body 72 is provided with a protrusion 76a protruding upward (toward the cutting cord 60). This structure can prevent the cutting cord 60 from entering a gap between the opening 76 and the cord holder 50. Consequently, entanglement and cutting of the cutting cord 60 can be avoided. The protrusion 76a of the present embodiment surrounds the entire circumference of the opening 76; however, in another embodiment, the protrusion 76a may be formed intermittently along the edge of the opening 76.

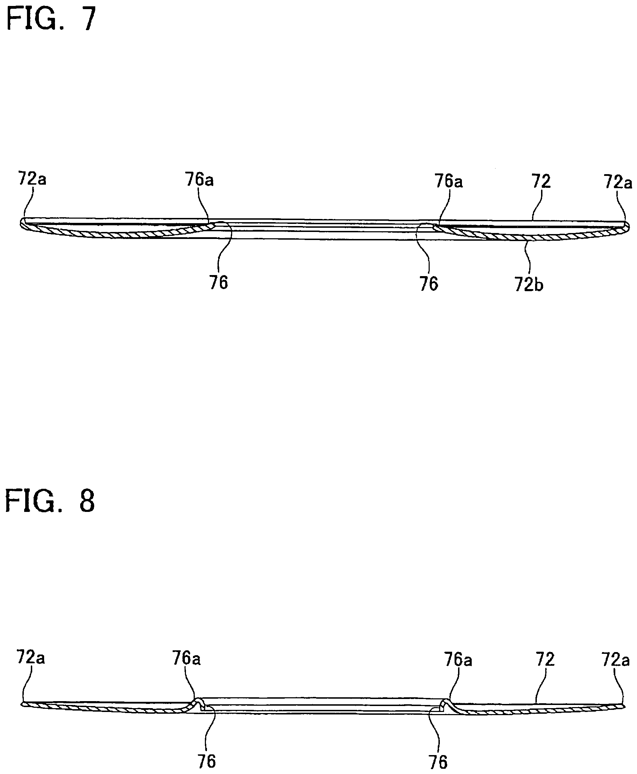

The cross-sectional shape of the under cover 70 can be changed in various ways. FIGS. 7 and 8 show examples of the cross-sectional shape of the under cover 70. In the under cover 70 shown in FIGS. 7 and 8 as well, the outer edge 72a of the cover main body 72 is curved upward in order to prevent the outer edge 72a from being stuck on plants and the ground surface. In addition, the edge of the opening 76 is provided with the protrusion 76a protruding upward, preventing entanglement and cutting of the cutting cord 60. Because the cover main body 72 is entirely curved into a downward convex, the user can smoothly operate the brush cutter 10. Note that an intermediate position 72b formed in a radial direction of the cover main body 72 of the under cover 70 shown in FIG. 7 protrudes farthest downward.

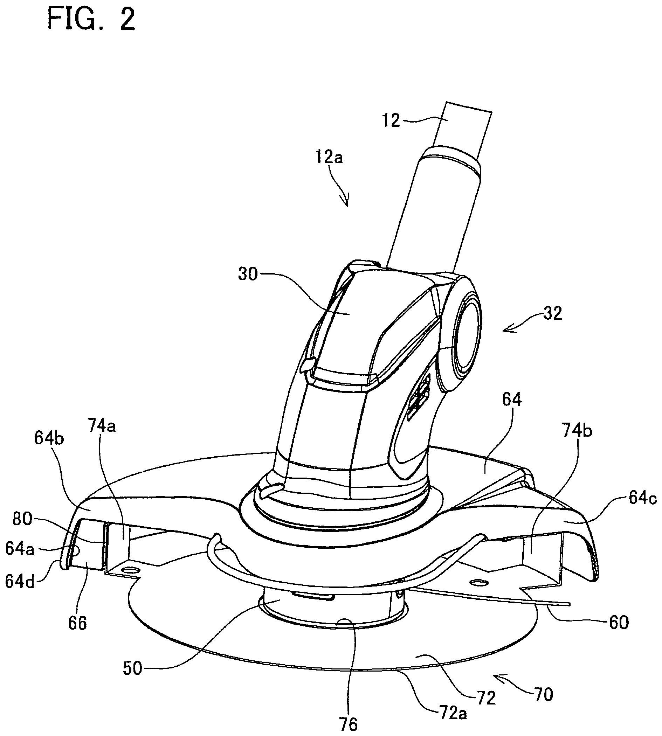

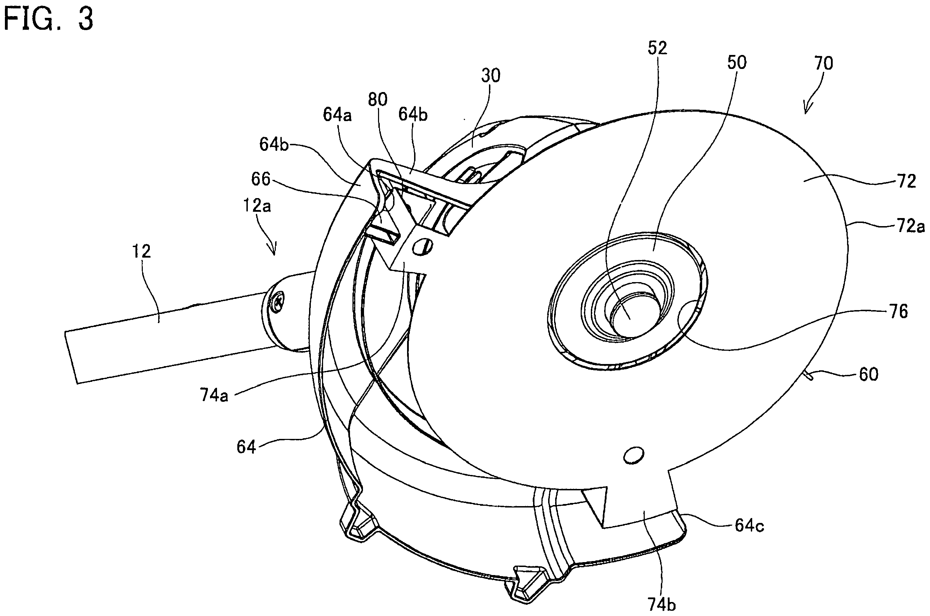

As shown in FIGS. 2 and 3, a trimming cutter 80 is integrally formed with the under cover 70. The trimming cutter 80 is located inside the upper cover 64. The trimming cutter 80 of the present invention is formed on, but not limited to, an edge of the support 74a of the under cover 70. The trimming cutter 80 cuts the tip of the cutting cord 60 that is fed excessively from the cord holder 50, and then trims the cutting cord 60 extending from the cord holder 50 to a proper length.

A bouncing wall 66 is formed in the vicinity of the trimming cutter 80. At least a part of the bouncing wall 66 is located on the radial outside (on the side opposite to the cord holder 50) with respect to the trimming cutter 80. The piece of the cutting cord 60 cut by the trimming cutter 80 collides with the bouncing wall 66 and is bounced off toward the opposite side of the user. In the brush cutter 10 of the present embodiment, the bouncing wall 66 is disposed on the inside of the upper cover 64. The bouncing wall 66 is located away from the first radially-extending edge 64b of the upper cover 64 in the direction of rotation of the cord holder 50 (i.e., the direction of rotation of the cutting cord 60). Consequently, a portion 64d of the upper cover 64 extends from the bouncing wall 66 in a direction opposite to the direction of rotation of the cord holder 50 (i.e. to the front direction of the bouncing wall 66). According to this configuration, the cut piece of the cutting cord 60 is bounced off not only by the bouncing wall 66 but also by an inner surface 64a of the portion 64d of the upper cover 64. This can prevent the cut piece of the cutting cord 60 from scattering against the user, more reliably. In addition, the bouncing wall 66 is prevented from being damaged by coming into contact with external objects.

The bouncing wall 66 of the present embodiment is integrally formed with the inner surface 64a of the upper cover 64. This configuration can eliminate a gap between the inner surface 64a of the upper cover 64 and the bouncing wall 66, preventing, more reliably, the cut piece of the cutting cord 60 from scattering against the user.

The position or orientation in which the bouncing wall 66 is formed can be designed appropriately. According to the experiment by the inventors, when the bouncing wall 66 is designed to be perpendicular to a planar surface parallel to a central axis of the operating rod 12 and a rotation axis of the cord holder 50, scattering of the cut piece of the cutting cord 60 against the user can be prevented most effectively.

An internal structure of the motor housing 30 is described next with reference to FIGS. 4 and 5. The motor housing 30 accommodates a motor 40 for driving the brush cutter 10. The motor 40 is connected electrically to the battery pack 22 (see FIG. 1) and operated by electric power supplied from the battery pack 22. The motor housing 30 further accommodates a pinion gear 42 fixed to the motor 40, a driven gear 44 engaged with the pinion gear 42, and a spindle 46 to which the driven gear 44 is fixed. The spindle 46 is supported rotatably with respect to the motor housing 30. The cord holder 50 is fixed to a lower end of the driven gear 44. With this configuration, the cord holder 50 is mechanically connected to the motor 40 and rotatably driven by the motor 40.

An internal structure of the joint mechanism 32 is described with reference to FIG. 5. The lock-off button 34 of the joint mechanism 32 has a flange part 36. The flange part 36 has a substantially hexagonal outer shape, and the lock-off button 34 is supported so as to be unable to rotate with respect to the operating rod 12. A plurality of ribs 38 that is arranged circumferentially are formed on the flange part 36 of the lock-off button 34. A plurality of ribs (not shown), too, is formed on an inner surface of the motor housing 30 so as to correspond to the ribs 38. Normally, the lock-off button 34 is biased toward the motor housing 30, and the ribs 38 of the lock-off button 34 are engaged with the ribs of the motor housing 30. Here, the motor housing 30 is prohibited from swinging with respect to the operating rod 12. However, pushing the lock-off button 34 can release the aforementioned engagement of the ribs 38, allowing the motor housing 30 to swing with respect to the operating rod 12. The lock-off button 34 is disposed on a rotation axis of the joint mechanism 32 so that the user can easily adjust the angle of the motor housing 30 while pushing the lock-off button 34.

The joint mechanism 32 is further provided with a rubber pin 39. The rubber pin 39 is a rubber member made of rubber. The rubber pin 39 is fixed to the motor housing 30 and in contact with the front end 12a of the operating rod 12 that swings relative thereto. When the user swings the motor housing 30 relative to the operating rod 12, the rubber pin 39 slides with respect to the front end 12a of the operating rod 12, generating an appropriate frictional force. This provides the user with an appropriate resistance, allowing the user to easily adjust the angle of the motor housing 30.

An internal structure of the cord holder 50 is described with reference to FIG. 4. The cord holder 50 accommodates a spool 54. The cutting cord 60 is wrapped around the spool 54. The aforementioned cord feeding button 52 is fixed to the spool 54. The cord feeding button 52 and the spool 54 are biased downward by a spring 58 and therefore normally unable to rotate with respect to the cord holder 50. When the cord feeding button 52 is pressed while the cord holder 50 is rotated, the spool 54 separates from the cord holder 50, thereby enabling the spool 54 to rotate with respect to the cord holder 50. At this moment, the cutting cord 60 wrapped around the spool 54 is fed by centrifugal force that acts on the cutting cord 60 extending from the cord holder 50.

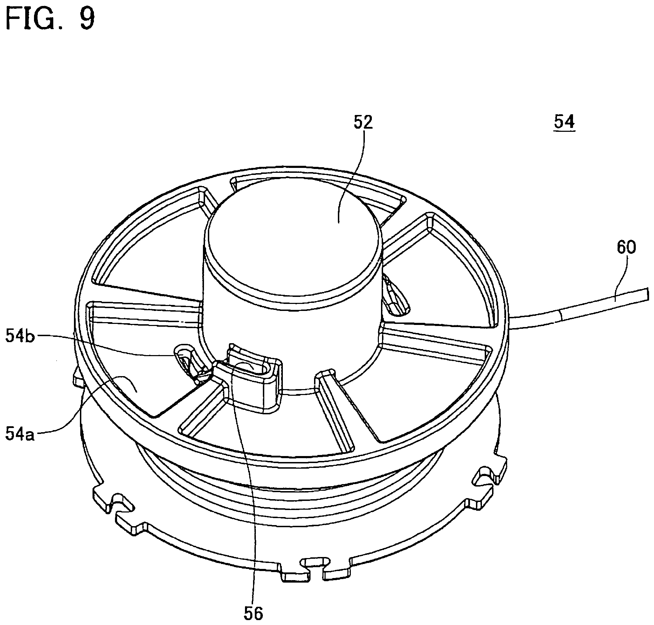

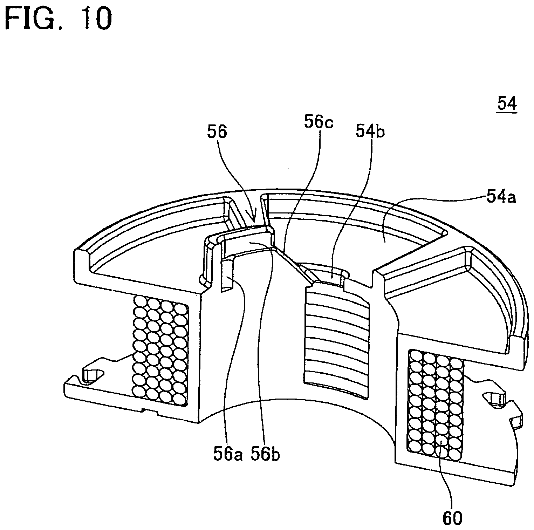

A structure of the spool 54 is described with reference to FIGS. 9 and 10. As described above, the cord feeding button 52 is fixed to the spool 54. A flange 54a of the spool 54 is provided with a base end locking part 56. The base end locking part 56 locks a base end of the cutting cord 60 when wrapping the cutting cord 60 around the spool 54. Because the base end locking part 56 is formed on an outer surface of the flange 54a, a cord passage hole 54b for allowing the passage of the cutting cord 60 therethrough is formed on the flange 54a of the spool 54.

FIG. 10 is a cross-sectional diagram of the spool 54 cut by a cylindrical surface passing through the base end locking part 56, showing the inside of the base end locking part 56. As shown in FIG. 10, the base end locking part 56 has a locking hole 56a, a retention groove 56b, and a guide inclined surface 56c. The locking hole 56a is a hole into which the base end of the cutting cord 60 is inserted. The locking hole 56a is opened in an axial direction of the spool 54 so as to allow the base end of the cutting cord 60 to be inserted therethrough easily. The cutting cord 60, with the base end thereof inserted into the locking hole 56a, is guided to the cord passage hole 54b on the flange 54a, by the retention groove 56b and the guide inclined surface 56c. Here, the guide inclined surface 56c continuing to the cord passage hole 54b is inclined along the circumferential direction. Accordingly, the cutting cord 60 can be guided smoothly without being folded by force. The user, therefore, can easily wrap the cutting cord 60 around the spool 54.

## Claims

1. A brush cutter (10) comprising:
an operating rod (12);
a cord holder (50) configured to accommodate a spool (54) and be rotatably driven at a front end (12a) of the operating rod (12);
a cutting cord (60) wrapped around the spool (54) accommodated within the cord holder (50) and configured such that a tip of the cutting cord (60) is drawn out from the cord holder (50);
an upper cover (64) attached to the front end (12a) of the operating rod (12) and configured to cover from an upper side and lateral side a part of a region in which the cutting cord (60) extending from the cord holder (50) revolves such that the upper cover (64) prevents objects such as plants or rocks from scattering against the user, and
wherein the cord holder (50) comprises a cord feeding button (52) that projects downward and is configured to feed the cutting cord (60) by being pressed,
**characterized in that** the brush cutter (10) further comprises:
an under cover (70) configured to cover from an under side a part of the region in which the cutting cord (60) extending from the cord holder (50) revolves, wherein the under cover (70) is provided with an opening (76) that exposes the cord feeding button (52) and the under cover (70) is fixed to the upper cover (64),
wherein the cord feeding button (52) is provided with a portion that is located lower than the under cover (70) and the cord feeding button (52) passes through the opening (76) of the under cover (70).

2. The brush cutter (10) as in claim 1, wherein an outer edge (72a) of the under cover (70) is curved or folded upward.

3. The brush cutter (10) as in claim 1 or 2, wherein a protrusion (76a) protruding upward is provided on an edge of the opening (76) of the under cover (70).

4. The brush cutter (10) as in any one of claims 1 to 3, wherein a cutoff (78) is provided on the under cover (70) so as to extend from an outer edge (72a) of the under cover (70) to the opening (76).

5. The brush cutter (10) as in claim 4, wherein the cutoff is at least partly located below the operating rod (12).

6. The brush cutter (10) as in any one of claims 1 to 5, further comprising a trimming cutter (80) configured to cut the tip of the cutting cord (60) drawn out from the cord holder (50), wherein the trimming cutter (80) is integrally formed with the under cover (70).

## Patentansprüche

1. Buschräumer (10), der umfasst:
eine Bedienstange (12);
einen Schnurhalter (50), der aufgebaut ist, um eine Spule (54) aufzunehmen und drehbar angetrieben zu werden, an einem vorderen Ende (12a) der Bedienstange (12);
eine Schneidschnur (60), die um die in dem Schnurhalter (50) aufgenommene Spule (54) gewickelt ist und derart aufgebaut ist, dass eine Spitze der Schneidschnur (60) aus dem Schnurhalter (50) herausgezogen wird;
eine obere Abdeckung (64), die an dem vorderen Ende (12a) der Bedienstange (12) befestigt ist und aufgebaut ist, um einen Teil eines Bereichs, in dem die Schneidschnur (60), die sich von dem Schnurhalter (50) erstreckt, rotiert, von einer Oberseite und einer seitlichen Seite abzudecken, so dass die obere Abdeckung (64) verhindert, dass Gegenstände, wie etwa Pflanzen oder Steine, gegen den Benutzer gestreut werden, und
wobei der Schnurhalter (50) einen Schnurvorschubknopf (52) umfasst, der nach unten vorsteht und aufgebaut ist, um die Schneidschnur (60) zuzuführen, indem er gedrückt wird,
**dadurch gekennzeichnet, dass** der Buschräumer (10) ferner umfasst:
eine untere Abdeckung (70), die aufgebaut ist, um einen Teil des Bereichs, in dem die Schneidschnur (60), die sich von dem Schnurhalter (50) erstreckt, rotiert, von einer Unterseite abzudecken, wobei die untere Abdeckung (70) mit einer Öffnung (76) versehen ist, die den Schnurvorschubknopf (52) freilegt, und wobei die untere Abdeckung (70) an der oberen Abdeckung (64) fixiert ist,
wobei der Schnurvorschubknopf (52) mit einem Abschnitt versehen ist, der tiefer als die untere Abdeckung (70) angeordnet ist, und der Schnurvorschubknopf (52) durch die Öffnung (76) der unteren Abdeckung (70) geht.

2. Buschräumer (10) nach Anspruch 1, wobei ein Außenrand (72a) der unteren Abdeckung (70) gekrümmt oder nach oben geklappt ist.

3. Buschräumer (10) nach Anspruch 1 oder 2, wobei ein Vorsprung (76a), der nach oben vorsteht, auf einem Rand der Öffnung (76) der unteren Abdeckung (70) bereitgestellt ist.

4. Buschräumer (10) nach einem der Ansprüche 1 bis 3, wobei eine Abschaltung (78) derart auf der unteren Abdeckung (70) bereitgestellt ist, dass sie sich von einem Außenrand (72a) der unteren Abdeckung (70) zu der Öffnung (76) erstreckt.

5. Buschräumer (10) nach Anspruch 4, wobei die Abschaltung sich wenigstens teilweise unter der Bedienstange (12) befindet.

6. Buschräumer (10) nach einem der Ansprüche 1 bis 5, der ferner eine Beschneidungsvorrichtung (80) umfasst, die aufgebaut ist, um die Spitze der Schneidschnur (60), die aus dem Schnurhalter (50) herausgezogen wird, zu schneiden, wobei die Beschneidungsvorrichtung (80) integral mit der unteren Abdeckung (70) ausgebildet ist.

## Revendications

1. Débroussailleuse (10) comprenant :
une tige de manoeuvre (12) ;
un support de fil (50) conçu pour recevoir une bobine (54) et être entraîné par rotation à une extrémité avant (12a) de la tige de manoeuvre (12) ;
un fil de coupe (60) enroulé autour de la bobine (54) logée à l'intérieur du support de fil (50) et conçu de sorte qu'une extrémité du fil de coupe (60) est tirée hors du support de fil (50) ;
un couvercle supérieur (64) fixé à l'extrémité avant (12a) de la tige de manoeuvre (12) et conçu pour couvrir d'un côté supérieur et d'un côté latéral une partie d'une région dans laquelle le fil de coupe (60) s'étendant depuis le support de fil (50) tourne de sorte que le couvercle supérieur (64) empêche des objets comme des plantes ou des roches d'être projetés contre l'utilisateur, et
dans laquelle le support de fil (50) comprend un bouton d'alimentation de fil (52) qui se projette vers le bas et qui est conçu pour alimenter le fil de coupe (60) en étant pressé,
**caractérisée en ce que** la débroussailleuse (10) comprend en outre :
un couvercle inférieur (70) conçu pour couvrir depuis un côté inférieur une partie de la région dans laquelle le fil de coupe (60) s'étendant depuis le support de fil (50) tourne, dans laquelle le couvercle inférieur (70) est doté d'une ouverture (76) qui expose le bouton d'alimentation de fil (52) et le couvercle inférieur (70) est fixé au couvercle supérieur (64),
dans laquelle le bouton d'alimentation de fil (52) est muni d'une partie qui est située plus basse que le couvercle inférieur (70) et le bouton d'alimentation de fil (52) passe au travers de l'ouverture (76) du couvercle inférieur (70).

2. Débroussailleuse (10) selon la revendication 1, dans laquelle un bord extérieur (72a) du couvercle inférieur (70) est courbé ou plié vers le haut.

3. Débroussailleuse (10) selon la revendication 1 ou 2, dans laquelle une saillie (76a) faisant saillie vers le haut est fournie sur un bord de l'ouverture (76) du couvercle inférieur (70).

4. Débroussailleuse (10) selon l'une quelconque des revendications 1 à 3, dans laquelle un coupe-circuit (78) est fourni sur le couvercle inférieur (70) de manière à s'étendre depuis un bord extérieur (72a) du couvercle inférieur (70) de l'ouverture (76).

5. Débroussailleuse (10) selon la revendication 4, dans laquelle le coupe-circuit est au moins partiellement situé sous la tige de manoeuvre (12).

6. Débroussailleuse (10) selon l'une quelconque des revendications 1 à 5, comprenant en outre une lame de coupe (80) conçue pour couper l'extrémité du fil de coupe (60) tirée hors du support de fil (50), dans laquelle la lame de coupe (80) est intégralement formée avec le couvercle inférieur (70).
